# EUROPÄISCHE PATENTSCHRIFT

(11) **EP 2 879 856 B1**
(45) Veröffentlichungstag und Bekanntmachung des Hinweises auf die Patenterteilung: **09.10.2019**
(21) Anmeldenummer: 13736865.0
(22) Anmeldetag: 05.07.2013
(51) Int. Cl.: B29C 48/25, B29C 48/90, F16J 15/52, B29C 48/09, B29C 48/11, B29C 48/12

(54) **DICHTUNG ZUM EINSATZ IN EINER STRANGPRESSVORRICHTUNG**
SEAL FOR USE IN AN EXTRUSION DEVICE
JOINT D'ÉTANCHÉITÉ DESTINÉ À ÊTRE UTILISÉ DANS UN DISPOSITIF D'EXTRUSION

(30) Priorität: 05.07.2012 DE 102012106035
(43) Veröffentlichungstag der Anmeldung: 10.06.2015
(73) Patentinhaber: KraussMaffei Technologies GmbH, 80997 München (DE)
(72) Erfinder: ALTMANN, Aron, 80805 München (DE); GEYER, Mathias, 81245 München (DE)
(74) Vertreter: Roider, Stephan
(86) Internationale Anmeldenummer: PCT/EP2013/064315
(87) Internationale Veröffentlichungsnummer: WO 2014/006210

(56) Entgegenhaltungen:
- EP-A1- 1 500 853
- WO-A1-2005/108830
- WO-A1-2009/127567
- DE-B3-102008 019 321
- DE-U1-202004 008 107
- JP-U- H0 541 758

## Beschreibung

Die Erfindung betrifft eine Dichtung zum Einsatz in einer Strangpressvorrichtung zur Herstellung von Endlosprofilen, insbesondere Kunststoffrohren.

Dichtungen dieser Art sind in vielerlei Ausgestaltungen bekannt. Ein bewährtes Dichtungsprinzip wird beispielsweise bei Rohrextrusionsanlagen mit im Betrieb veränderlichem Rohrdurchmesser am Ausgang der Vakuumkammer, zwischen der Vakuumkammer und dem in Extrusionsrichtung nachgeordneten Wassertank, angewandt. Die sogenannte Segmentdichtung umfasst radial bewegliche, um das Rohr herum angeordnete Segmente sowie in Extrusionsrichtung vor der Segmentanordnung eine einfache elastische Dichtscheibe mit einer Durchlassöffnung für das extrudierte Rohr. Dies funktioniert, da die Strömungsrichtung (auch Dichtrichtung oder Druckgefällerichtung) aufgrund des Unterdrucks im Vakuumtank entgegen der Extrusionsrichtung wirkt. Dieses Prinzip lässt sich jedoch nicht ohne Weiteres auf andere Bereiche der Extrusionsanlage übertragen, sobald die Dichtrichtung und die Extrusionsrichtung gleichgerichtet sind. Die Dichtscheibe wird dann zerstört, da sie bspw. am Rohr haften bleibt oder in die Segmentanordnung gezogen wird.

Bspw. in Extrusionsrichtung hinter dem Wassertank, wo die Extrusionsrichtung und die Dichtrichtung gleichgerichtet sind, wurden daher häufig Trichterdichtungen eingesetzt. Diese werden zwar nicht zerstört, sind aber nur bei kleinen Durchmesser (ca. bis 250 mm) überhaupt praktikabel (der Druckaufbau durch das Wasser ist bei großen Durchmessern zu groß, so dass keine Dichtwirkung mehr erzielt wird) und haben innerhalb des durchmesserveränderlichen Bereichs den Nachteil, der mangelnden Dichtwirkung bei kleineren Rohrdurchmessern oder sogenanntes Rattern bei größeren Durchmessern. Darüber hinaus unterliegen solche Dichtungen einem hohen Verschleiß, sollten also leicht auswechselbar sein und vorteilhafterweise einen geringeren Materialaufwand haben.

EP 1 500 853 A1 offenbart Verstärkungselemente, die mit ihrem einen Ende nahe am Dichtrand mittels eines Bolzens mit der Dichtungsscheibe vernietet sind und mit ihrem anderen Ende durch die Dichtungsschreibe hindurch mittels eines weiteren Bolzens mit einem Führungselement verschraubt sind.

WO 2005/108830 A1 beschreibt einen Dichtkörper mit Steifungselemente, die sich vom inneren Dichtrand radial zum äußeren Rand des Dichtkörpers erstecken.

Der Erfindung liegt daher die Aufgabe zugrunde, eine Dichtung zum Einsatz in einer Strangpressvorrichtung bereitzustellen, welche die Nachteile des Standes der Technik überwindet.

Gelöst wird diese Aufgabe durch eine Dichtung gemäß Anspruch 1. Vorteilhafte Weiterbildungen sind in den Unteransprüchen angegeben.

Dabei liegt der Erfindung der Gedanke zugrunde, eine Dichtung zum Einsatz in einer Strangpressvorrichtung zur Herstellung von Endlosprofilen, insbesondere Kunststoffrohren, bereitzustellen, die eine elastische Dichtscheibe mit einer Durchführungsöffnung für das Endlosprofil umfasst, wobei die Durchführungsöffnung durch Ansetzen einer Radialkraft geweitet oder verengt werden kann. Dazu sind nahe dem die Durchführungsöffnung umgebenden Dichtrand, welcher faltenfrei an dem Endlosprofil anliegt, Anschlussmittel, bspw. Ösen, an oder in der Dichtscheibe angebracht, die über Verbindungsmittel, bspw. Haken oder Stifte, die in die Ösen eingreifen, mit Spannmitteln verbunden sind. Die Spannmittel üben eine Radialkraft auf die Anschlussmittel und somit den Dichtrand aus. Je nach Richtung der Radialkraft, radial zur Extrusionsachse nach außen oder nach innen, wird der Dichtrand also geweitet oder verengt. Dabei sind die Spannmittel in einer Ebene etwa parallel zur Dichtscheibe angeordnet und weisen ebenfalls eine Durchtrittsöffnung für das Endlosprofil auf.

Die Dichtscheibe ist vorteilhafterweise einstückig, vorteilhafterweise mit einem nahtlosen, umlaufenden Dichtrand, ausgestaltet. Der Begriff "einstückig" umfasst hier auch mehrere aufeinander vulkanisierte, verklebte oder in sonstiger Weise flächig verbundene Lagen aus einem oder mehreren Materialien. In einer vorteilhaften Ausgestaltung ist die Dichtscheibe zweilagig ausgestaltet, weist also zwei fest miteinander verbundene, bspw. verklebte, aufeinander vulkanisierte, Lagen auf. Es kann dann vorgesehen sein, dass die Anschlussmittel, Verbindungsmittel und/oder Spannmittel mindestens teilweise zwischen den Lagen angeordnet sind. Die Anschlussmittel, Verbindungsmittel und/oder Spannmittel können also vollständig zwischen den Lagen angeordnet sein; oder bspw. die Anschlussmittel, z.B. in Form von Ösen, zum Teil zwischen den Lagen, während die Verbindungsmittel, z.B. in Form von Haken, und die Spannmittel, z.B. in Form von Drahtzügen, außerhalb der Lagen angeordnet sind; oder bspw. die Anschlussmittel und Verbindungsmittel zwischen den Lagen und die Spannmittel, z.B. in Form von Drahtzügen, die von innen (zwischen den Lagen) nach außen (außerhalb der Lagen) verlaufen. Die Dichtscheibe ist so elastisch, dass ein radiales Aufweiten des Dichtrandes und Rückführen in den Ausgangszustand möglich ist. Im ungespannten Ausgangszustand ist die Dichtscheibe nahezu plan in einer Ebene etwa senkrecht zur Extrusionsrichtung angeordnet. Es ist auch möglich, mehrere Dichtscheiben axial hintereinander anzuordnen.

Auf oder in der Dichtscheibe sind Anschlussmittel, bspw. in Form von Ringen oder Ösen, Stiften, Haken, Schrauben, Muttern, Schlaufen, Kauschen, etc., fest mit dieser verbunden, bspw. einvulkanisiert, geklebt, etc., und so entlang des Dichtrandes verteilt, dass dieser stets zuverlässig dichtend am Endlosprofil anliegt. Die Anschlussmittel müssen so nah am Dichtrand angebracht sein, dass dieser durch eine radiale Krafteinwirkung auf die Anschlussmittel geweitet und verengt werden kann.

Die Anschlussmittel sind über Verbindungsmittel mit den Spannmitteln verbunden. Die Verbindungsmittel können bspw. als Stifte, Haken, Ringe, Ösen, Schrauben, Muttern, Schlaufen, Kauschen, etc. ausgestaltet sein, die an den Spannmitteln angebracht sind. Anschlussmittel und Verbindungsmittel sind zweckmäßigerweise komplementär zueinander ausgestaltet - bspw. Öse und Stift, Haken und Öse, Schraube und Mutter, Schlaufe und Haken, etc. Eine lösbare Verbindung zwischen Anschluss- und Verbindungsmitteln, wie bspw. Ösen, die auf Stifte gesteckt werden können, hat den Vorteil, dass die verschleißende Dichtscheibe schnell ausgewechselt werden kann. Es ist auch möglich, dass die Anschlussmittel auf andere Weise mit den Verbindungsmitteln verbunden sind, bspw. einvulkanisiert, verklebt, verschweißt, verspleißt, etc., je nach Ausgestaltung der Anschluss- und Verbindungsmittel. Die Verbindung muss bei einer Kraftübertragung zwischen Spannmitteln und Anschlussmitteln zuverlässig halten.

Die Spannmittel sind vorteilhafterweise in einer Ebene parallel zur Dichtscheibe angeordnet. In vorteilhaften Ausgestaltungen sind die Spannmittel nahe der Dichtscheibe, an dieser anliegend oder in diese eingebracht, bspw. einvulkanisiert, angeordnet. Wenn mehrere Dichtscheiben axial hintereinander angeordnet sind, können die Spannmittel auch zwischen den Dichtscheiben angeordnet sein.

Mittels der Spannmittel wird über die Verbindungsmittel eine radial wirkende Kraft auf die Anschlussmittel ausgeübt, so dass der Durchmesser der Durchführungsöffnung verändert wird.

Die Spannmittel weisen vorzugsweise eine durchmesserveränderliche Durchtrittsöffnung auf, wobei die Verbindungsmittel vorteilhafterweise so entlang des Umfangs der Durchtrittsöffnung angebracht sind, dass durch eine Durchmesserveränderung der Durchtrittsöffnung ebenfalls eine Durchmesserveränderung der Durchführungsöffnung der Dichtscheibe bewirkt wird. Es kann sinnvoll sein, die Verbindungsmittel nahe der Durchtrittsöffnung der Spannmittel anzubringen, um die Durchführungsöffnung der Dichtscheibe in größtmöglichem Maß aufweiten zu können. Wenn die Spannmittel in die Dichtscheibe integriert sind, ist die Durchtrittsöffnung sozusagen implizit umfasst.

In einer vorteilhaften Ausgestaltung sind die Spannmittel als radial zur Extrusionsachse verlaufende Drahtzüge (auch als Seilzüge bezeichnet, bspw. aus Metall oder Kunstfasern) ausgestaltet. Vorteilhaft sind am der Extrusionsachse zugewandten Ende der Drahtzüge Kauschen oder Schlaufen als Verbindungsmittel ausgeformt. Spann- und Verbindungsmittel wären in diesem Fall also einstückig ausgestaltet. Weiter vorteilhaft sind die Drahtzüge samt Kauschen in die Dichtscheibe, bspw. zwischen zwei Lagen, einvulkanisiert, so dass die Kauschen in der Dichtscheibe fixiert sind, während die Drahtzüge in der Dichtscheibe, etwa wie in einem Führungskanal, verschiebbar sind. Zur Fixierung der Kauschen in der Dichtscheibe können bspw. innerhalb der Kauschen Ankerscheiben, bspw. aus dem gleichen Material wie die Lagen der Dichtscheibe, als Anschlussmittel einvulkanisiert sein. Die Anschlussmittel sind dann sozusagen einstückig mit der Dichtscheibe ausgestaltet. Die Drahtzüge und/oder Kauschen können auch außerhalb der Dichtscheibe angeordnet sein.

Alternativ können die Anschlussmittel als Ösen, bspw. Blechstücke mit einem Loch, ausgestaltet sein, die vollständig oder teilweise zwischen den Lagen der Dichtscheibe angeordnet und fest mit ihr verbunden sind. Die Drahtzüge können an ihren der Extrusionsachse zugewandten Enden Haken als Verbindungsmittel aufweisen, die in die Ösen eingreifen. Ösen und Drahtzüge können auch auf andere Weise verbunden sein. Auch eine umgekehrte Verbindung ist denkbar, also Haken als Anschlussmittel und Ösen als Verbindungsmittel an den Drahtzügen.

Es können Antriebsmittel, bspw. ein Stellmotor oder Pneumatikzylinder, zum Einziehen oder Ausgeben der Drahtzüge vorgesehen sein. In einer vorteilhaften Ausgestaltung kann als Antriebsmittel ein Umfangsrad vorgesehen sein, welches so mit den Drahtzügen verbunden ist, dass durch Drehen des Umfangsrades die radiale Länge der Drahtzüge verändert wird. Dies geschieht bspw. durch Umlenkung der Drahtzüge auf einem gegenüber der Durchtrittsöffnung äußeren Durchmesser der Spannmittelanordnung vom radialen Verlauf auf einen eher umfangsmäßigen Verlauf. Diese Umlenkung kann bspw. an einem Rahmen erfolgen, in dem die Dichtscheibe fixiert ist und um den das Umfangsrad geführt wird. Durch Drehen des Umfangsrades verkürzen oder verlängern sich die radial und die umfangsmäßig verlaufenden Abschnitte der Drahtzüge relativ zu einander. Das Umfangsrad kann manuell oder wiederum mittels eines Stellmotors oder ähnlichem gedreht werden. Der Rahmen kann einen Kanal für die umfangsmäßig verlaufenden Abschnitte der Drahtzüge aufweisen.

In einer anderen vorteilhaften Ausgestaltung sind die Spannmittel als etwa radial zur Extrusionsachse ausgerichtete, über den Umfang verteilte Segmente, bspw. aus Kunststoff oder Metall, ausgestaltet, die zwischen sich, auf der Extrusionsachse, die Durchtrittsöffnung einschließen. Vorteilhafterweise kann durch radiales Verfahren der Segmente der Durchmesser der Durchtrittsöffnung verändert werden. Das radiale Verfahren kann durch passive Anpassung an den Rohrdurchmesser, oder aktiv mit Antriebsmitteln, bspw. einem Stellmotor oder Pneumatikzylinder, erfolgen.

In einer vorteilhaften Ausgestaltung sind die Segmente nahe der Durchtrittsöffnung mit etwa axial, parallel zur Extrusionsachse, verlaufenden Stiften als Verbindungsmitteln versehen, so dass eine Dichtscheibe mit entsprechend eingelassenen Ösen als Anschlussmitteln leicht aufgesteckt werden kann. Bei der passiven Durchmesseranpassung werden die Segmente bei sich vergrößerndem Rohrdurchmesser radial nach außen geschoben und nehmen den Dichtrand der Dichtscheibe aufgrund der Verbindung mittels Verbindungs- und Anschlussmitteln mit. Verkleinert sich der Rohrdurchmesser wieder, bewegen sich die Segmente wieder radial nach innen, bspw. durch die elastische Wirkung der Dichtscheibe oder zusätzliche Federelemente. Bei einer passiven Anpassung der Durchführungsöffnung an den Querschnitt des Endlosprofils, insbesondere den Rohrdurchmesser, müssen die Rückstellkraft der Dichtscheibe (aufgrund ihrer Elastizität) und, falls vorhanden, die Rückstellkraft der Segmente (bspw. durch Federn) so ausgestaltet sein, dass bei einer Vergrößerung des Rohrdurchmessers der Anpressdruck durch die Dichtscheibe und/oder die Segmente nicht zu hoch ist und das Rohr nicht beschädigt wird. Das radiale Verfahren der Segmente kann, wie erwähnt, auch durch Zuhilfenahme von Antriebsmitteln unterstützt werden.

In einer weiteren vorteilhaften Ausgestaltung sind die Spannmittel als über den Umfang verteilte, in einer Ebene etwa senkrecht zur Extrusionsachse angeordnete Streben ausgestaltet, die in ihrer Mitte, auf der Extrusionsachse, die Durchtrittsöffnung einschließen. In einer vorteilhaften Ausgestaltung sind die Streben mit ihrem einen Ende auf einem gegenüber der Durchtrittsöffnung äußeren Durchmesser der Spannmittelanordnung schwenkbar gelagert, während ihre gegenüberliegenden, der Extrusionsachse zugewandten Enden verschiebbar ineinander greifen und etwa tangential zur Durchtrittsöffnung verlaufen, so dass durch Verschwenken der Streben der Durchmesser der Durchtrittsöffnung verändert wird. Die Durchmesserveränderung der Durchtrittsöffnung kann wiederum passiv oder aktiv, wie bereits oben beschrieben, erfolgen.

In einer vorteilhaften Ausgestaltung sind an den der Extrusionsachse zugewandten Enden der Streben parallel zur Extrusionsachse verlaufende Stifte als Verbindungsmittel vorgesehen, so dass eine Dichtscheibe mit entsprechend eingelassenen Ösen als Anschlussmitteln leicht aufgesteckt werden kann. Je länger die Streben sind bzw. je weiter die Schwenkpunkte von der Extrusionsachse entfernt liegen, desto mehr nähert sich die von den Stiften beschriebene Kurve bei einer Durchmesserveränderung dem Radiusverlauf an. Es ist also vorteilhaft, die Distanz zwischen Schwenkpunkten und Extrusionsachse möglichst groß zu wählen, um ein Verdrehen der Dichtscheibe um die Extrusionsachse zu vermeiden oder zumindest sehr gering zu halten.

Die Spannmittel können, bspw. in ihrer Ausführung als Segmente oder Streben, als Stützkonstruktion zum axialen Abstützen der Dichtscheibe ausgestaltet sein. Die Spannmittel sind dann so zur Dichtscheibe positioniert, dass eine axiale Bewegung des Dichtrandes entlang des Endlosprofils weitgehend verhindert wird. Dies hat bspw. den Vorteil, dass die Dichtscheibe relativ dünn ausgestaltet sein kann, so dass ein geringerer Materialverbrauch für die verschleißende Dichtscheibe notwendig ist. Außerdem kann auf diese Weise die Rückstellkraft der Dichtscheibe relativ klein gehalten werden, was eine passive Durchmesseranpassung der als Stützkonstruktion ausgestalteten Spannmittel ermöglicht.

Spannmittel und Verbindungsmittel können miteinander einstückig ausgestaltet sein, bspw. Drahtzug als Spannmittel mit ausgebildeter Schlaufe oder Kausche als Verbindungsmittel oder einstückig ausgeformte Segmente mit Stiften als Spann- und Verbindungsmittel.

Wie bereits oben erwähnt, können Antriebsmittel, wie bspw. ein Stellmotor oder ein Pneumatikzylinder, vorgesehen sein, um die Spannmittel mit einer radialen Zug- oder Schubkraft zu versorgen. Im Falle der Ausgestaltung der Spannmittel als radial zur Extrusionsachse verlaufende Drahtzüge, kann, wie oben erwähnt, als Antriebsmittel ein Umfangsrad vorgesehen sein, welches so mit den Drahtzügen verbunden ist, dass durch Drehen des Umfangsrades die radiale Länge der Drahtzüge verändert wird. Desweiteren können Steuermittel zur automatischen Steuerung oder Regelung der Antriebsmittel in Abhängigkeit vom Querschnitt des Endlosprofils, insbesondere des Rohrdurchmessers, vorgesehen sein.

Die erfindungsgemäße Dichtung hat also viele Vorteile - sie ist unabhängig von der Dichtrichtung flexibel einsetzbar, bietet eine zuverlässige Dichtwirkung (auch bei großen Rohrdurchmesseränderungen), während Rattern bzw. Stick-Slip-Effekte vermieden werden, ist leicht auswechselbar und bedienbar, ist kostengünstiger und bewirkt zudem eine Platzersparnis durch geringere axiale Abmessungen.

Die Erfindung wird nachfolgend anhand der Ausführungsbeispiele und unter Bezugnahme auf die Zeichnungen näher erläutert. Weitere vorteilhafte Ausgestaltungen sind den Ausführungsbeispielen zu entnehmen.
- Fig. 1: zeigt einen Abschnitt einer Extrusionslinie mit einer Trichterdichtung und einer Segmentdichtung gemäß dem Stand der Technik.
- Fig. 2: zeigt den in Fig. 1 dargestellten Abschnitt einer Extrusionslinie mit einer erfindungsgemäßen Dichtung anstelle der Trichterdichtung.
- Fig. 3: zeigt einen Teil einer erfindungsgemäßen Dichtung gemäß einem ersten Ausführungsbeispiel der Erfindung mit radialen Segmenten als Spannmittel.
- Fig. 4: zeigt einen Teil einer erfindungsgemäßen Dichtung gemäß dem ersten Ausführungsbeispiel der Erfindung mit radialen Segmenten als Spannmittel und Stiften als Verbindungsmittel.
- Fig. 5: zeigt eine Dichtscheibe mit einvulkanisierten Ringen als Anschlussmittel gemäß dem ersten Ausführungsbeispiel der Erfindung.
- Fig. 6: zeigt einen vergrößerten Ausschnitt aus Fig. 5.
- Fig. 7: zeigt einen Schnitt einer erfindungsgemäßen Dichtung gemäß dem ersten Ausführungsbeispiel der Erfindung im Betrieb.
- Fig. 8: zeigt einen vergrößerten Ausschnitt aus Fig. 7.
- Fig. 9: zeigt einen Teil einer erfindungsgemäßen Dichtung gemäß einem zweiten Ausführungsbeispiel der Erfindung mit schwenkbaren Streben als Spannmittel.
- Fig. 10: zeigt eine erfindungsgemäße Dichtung gemäß einem dritten Ausführungsbeispiel der Erfindung mit einvulkanisierten Drahtzügen als Spannmittel.
- Fig. 11: zeigt eine vergrößerte Schnittdarstellung aus Fig. 10 mit Drahtzugaufnahme im Umfangsrad.
- Fig. 12: zeigt eine vergrößerte Schnittdarstellung aus Fig. 10 mit Ankerscheiben in den Kauschen.

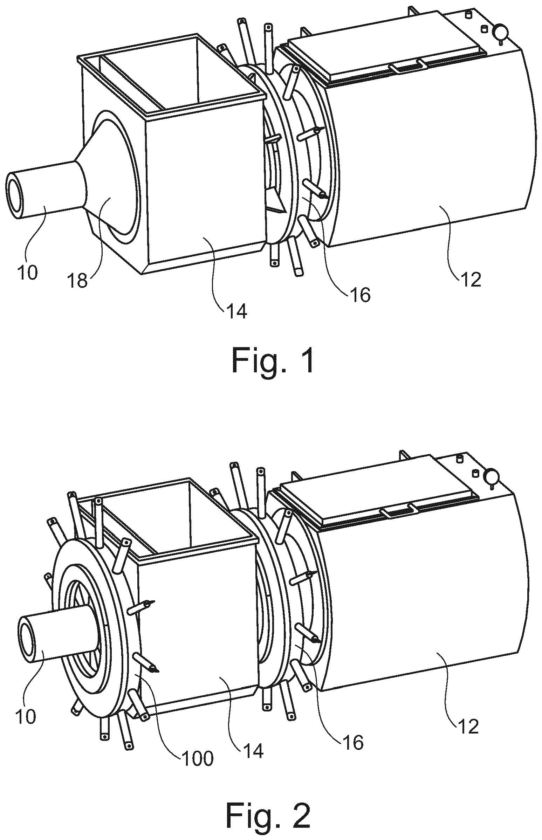

Fig. 1 zeigt einen Abschnitt einer Extrusionslinie, hier zur Herstellung von Rohren, mit einem durch einen Vakuumtank 12 und einen Wasservorlagebehälter 14 verlaufenden Rohr 10 sowie einer bekannten Segmentdichtung 16 zwischen Vakuumtank 12 und Wasservorlagebehälter 14 und einer Trichterdichtung 18 am Ausgang des Wasservorlagebehälters 14.

Darin umfasst die Segmentdichtung 16 lediglich eine elastische, etwa plane und senkrecht zur Extrusionsachse angeordnete Dichtscheibe mit einer Durchführungsöffnung für das extrudierte Rohr 10 sowie eine in Extrusionsrichtung hinter und parallel zu der Dichtscheibe angeordnete, radial bewegliche Segmente. Da die Strömungsrichtung aufgrund des Unterdrucks im Vakuumtank 12 entgegen der Extrusionsrichtung wirkt, funktioniert dieses Prinzip, ohne die einfache Dichtscheibe zu zerstören.

Am Ausgang des Wasservorlagebehälters 14 gibt es diese einander entgegenwirkenden Kräfte nicht, Extrusionsrichtung und Strömungsrichtung sind gleichgerichtet. Daher kann die Segmentdichtung an dieser Stelle nicht eingesetzt werden, sie würde zerstört werden. Man hat daher eine Trichterdichtung 18, wie in Fig. 1 gezeigt, verwendet. Diese ist jedoch bei kleinen Rohrdurchmessern undicht geworden und verursachte bei größeren Rohrdurchmessern sogenanntes Rattern. Zudem war die Trichterdichtung für sehr große Rohrdurchmesser (im Verstellbereich 250 bis 450 mm) nicht mehr einsetzbar.

Fig. 2 zeigt nun den in Fig. 1 dargestellten Abschnitt einer Extrusionslinie mit Vakuumtank 12 und Wasservorlagebehälter 14 sowie einer zwischen Vakuumtank 12 und Wasservorlagebehälter 14 angeordneten Segmentdichtung 16. Jedoch ist anstelle der Trichterdichtung am Ausgang des Wasservorlagebehälters 14 eine erfindungsgemäße Dichtung 100 gemäß einem ersten Ausführungsbeispiel angeordnet.

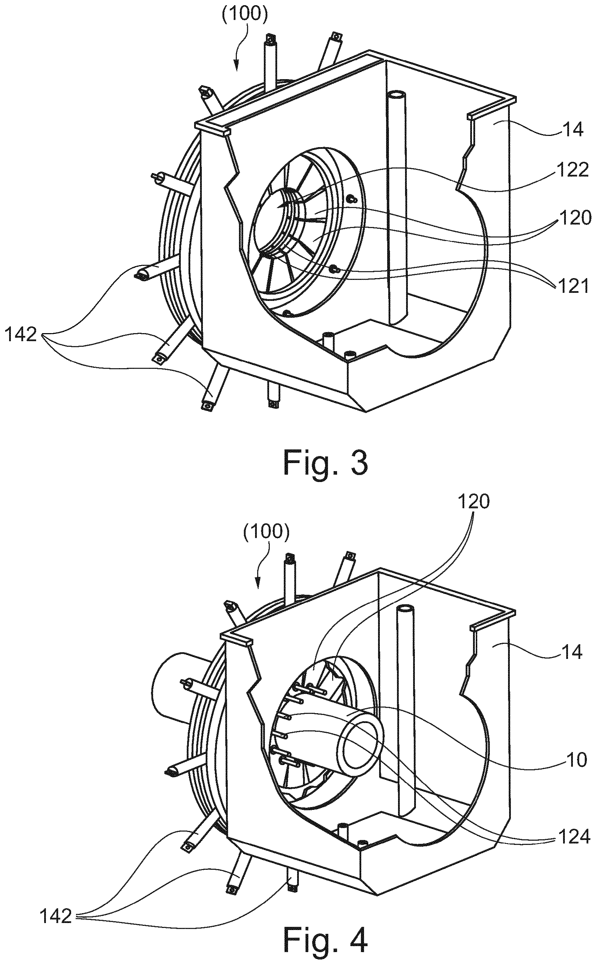

Fig. 3 zeigt einen Teil der erfindungsgemäßen Dichtung 100 gemäß dem ersten Ausführungsbeispiel mit umfangsmäßig in einer Ebene senkrecht zur Extrusionsachse angeordneten, radial ausgerichteten Spannmitteln in Form von Segmenten 120, welche in ihrer radialen Mitte, auf der Extrusionsachse, eine Durchtrittsöffnung 122 für das in dieser Figur nicht dargestellte, extrudierte Rohr bilden. Die Segmente 120 sind in diesem Ausführungsbeispiel aus Kunststoff. Die Segmente 120 weisen Segmentrollen 121 entlang der Durchtrittsöffnung 122 auf, die am Rohr 10 anliegen und auf dessen Oberfläche entlang rollen, um die Reibung möglichst gering zu halten. Die Segmente 120 sind radial beweglich angeordnet und werden bei einer Durchmesservergrößerung des Rohres 10 durch den Druck des Rohres 10 nach außen gedrückt. Diese Radialbewegung kann zusätzlich durch Antriebsmittel, bspw. Stellmotoren oder, wie in diesem Ausführungsbeispiel, Pneumatikzylinder 142, unterstützt werden.

Fig. 4 zeigt einen Teil der erfindungsgemäßen Dichtung 100 gemäß dem ersten Ausführungsbeispiel mit den Elementen aus Fig. 3 und zusätzlich mit auf den Segmenten 120 angebrachten Mitnehmerstiften 124 als Verbindungsmitteln. Die Mitnehmerstifte 124, bspw. aus Metall oder Kunststoff, sind nahe der Durchtrittsöffnung 122 für das extrudierte Rohr 10 umfangsmäßig angeordnet und etwa parallel zur Extrusionsachse ausgerichtet.

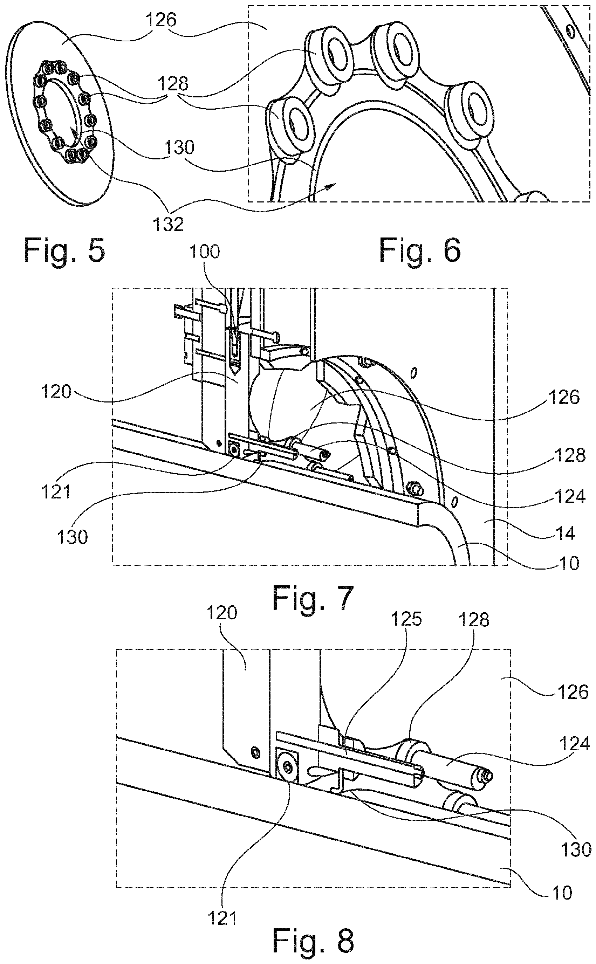

Fig. 5 zeigt eine Dichtscheibe 126 mit einer Durchführungsöffnung 132, einem die Durchführungsöffnung 132 umgebenden Dichtrand 130 sowie nahe dem Dichtrand 130 angeordneten Mitnehmerringen 128 als Anschlussmitteln. Fig. 6 zeigt einen vergrößerten Ausschnitt aus Fig. 5. Wie in diesen Figuren gut zu erkennen ist, ist die Dichtscheibe 126 im ungespannten Ausgangszustand im Wesentlichen plan. In diesem Ausführungsbeispiel ist die Dichtscheibe 126 zudem einstückig und der Dichtrand 130 nahtlos umlaufend ausgestaltet. In diesem Ausführungsbeispiel sind die Mitnehmerringe 128, bspw. aus Metall, aufvulkanisiert und ist die Dichtscheibe 126 im Bereich der Mitnehmerringe 128, nahe des Dichtrandes 130, verstärkt. Natürlich können die Mitnehmerringe auch auf andere Weise an oder in der Dichtscheibe angebracht werden, bspw. durch Einstanzen oder Einnieten, oder es kann auf stabilisierende Elemente verzichtet werden und bspw. lediglich Löcher in die Dichtscheibe gestanzt werden.

Die Anordnung der Mitnehmerstifte 124 auf den Segmenten 120 und die Anordnung der Mitnehmerringe 128 auf der Dichtscheibe 126 sind so aufeinander abgestimmt, zueinander komplementär, dass wenn die Mitnehmerringe 128 über die Mitnehmerstifte 124 geschoben werden, die Dichtscheibe 126 etwa plan vor den Segmenten 120 angeordnet ist und der Dichtrand 130 am Rohr 10 anliegt.

Fig. 7 zeigt die erfindungsgemäße Dichtung 100 gemäß dem ersten Ausführungsbeispiel im Betrieb. Fig. 8 zeigt einen vergrößerten Ausschnitt aus Fig. 7. Die Dichtung 100 umfasst die Segmente 120 mit den Mitnehmerstiften 124 sowie die Dichtscheibe 126 mit den Mitnehmerringen 128. Ebenfalls dargestellt sind am radial inneren Ende der Segmente 120 angeordnete Segmentrollen 121, welche am Rohr 10 anliegen und auf dessen Oberfläche entlang rollen, um möglichst wenig Reibung zu verursachen. Die Segmente 120 sind in diesem Ausführungsbeispiel als Stützkonstruktion ausgestaltet und stützen die Dichtscheibe 126 axial gegen den in Extrusionsrichtung wirkenden Wasserdruck des Wassers im Wasservorlagebehälter 14 ab - in Fig. 7 ist zu erkennen, wie die Dichtscheibe 126 an den Segmenten 120 anliegt.

Die Mitnehmerstifte 124 sind nahe der Durchtrittsöffnung 122, über deren Umfang verteilt und parallel zur Extrusionsachse ausgerichtet auf den Segmenten 120 angebracht. In diesem Ausführungsbeispiel sind die Mitnehmerstifte 124 mittels Mitnehmerstiftankern 125, welche die Segmente 120 und die Mitnehmerstifte 124 axial durchdringen, an den Segmenten 120 verankert. Natürlich gibt es auch viele alternative Befestigungsmöglichkeiten, bspw. indem die Mitnehmerstifte die Segmente direkt durchdringen oder Segmente mit Mitnehmerstiften einstückig hergestellt sind.

Die Mitnehmerringe 128 sind auf die Mitnehmerstifte 124 aufgesteckt, so dass die Dichtscheibe 126 in ihrem entspannten Ausgangszustand etwa plan in Extrusionsrichtung vor den Segmenten 120 angeordnet ist. Dabei liegt der Dichtrand 130 am Rohr 10 an. In dieser Darstellung ist die Dichtscheibe 126 aufgrund des Wasserdrucks im Wasservorlagebehälter 14 etwas in Extrusionsrichtung ausgebaucht.

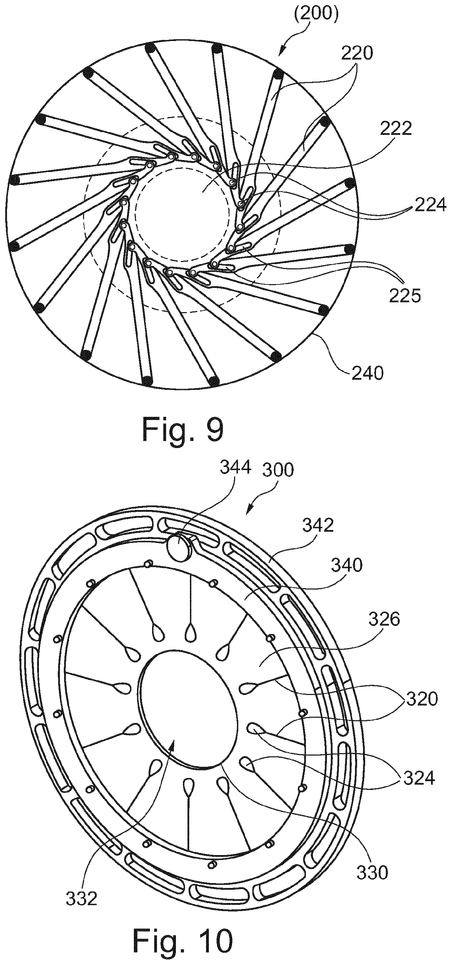

Fig. 9 zeigt die Ausgestaltung der Spannmittel als Streben 220 in einer erfindungsgemäßen Dichtung 200 gemäß einem zweiten Ausführungsbeispiel der Erfindung. Die Streben 220 sind im Wesentlichen in einer Ebene senkrecht zur Extrusionsrichtung angeordnet und bilden in ihrer Mitte, auf der Extrusionsachse, eine Durchtrittsöffnung 222. Auf einem gegenüber der Durchtrittsöffnung 222 äußeren Durchmesser mit der Extrusionsachse als Mittelpunkt ist ein Rahmen 240 angeordnet. Die Streben 220 sind mit ihrem der Extrusionsachse abgewandten Enden verschwenkbar in dem Rahmen 240 gelagert, während ihre der Extrusionsachse zugewandten Enden etwa tangential an der Durchtrittsöffnung 222 anliegen und ineinander verschiebbar gelagert sind. In diesem Ausführungsbeispiel sind für diese verschiebbare Verbindung der der Extrusionsachse zugewandten Enden der Streben 220 an jedem dieser Enden ein parallel zur Extrusionsachse verlaufender Stift 224 und ein zum Rahmen 240 gerichtetes Langloch 225 in der Strebe vorgesehen. Jeder Stift 224 greift in das Langloch 225 der benachbarten Strebe 220 und ist darin verschiebbar. Durch Verschwenken der Streben 220 im Rahmen 240 verschieben sich die Stifte 224 so in den Langlöchern 225, dass die Durchtrittsöffnung 222 vergrößert oder verkleinert wird. Dabei ist der Durchmesser des Rahmens 240 so groß gewählt, dass die Stifte 224 bei einer Durchmesserveränderung der Durchtrittsöffnung 222 einen Weg beschreiben, der nahezu auf dem Radius des Rahmens 240 liegt.

In diesem Ausführungsbeispiel sind die Stifte 224 so verlängert, dass sie, analog dem ersten Ausführungsbeispiel Mitnehmerstifte darstellen, auf welche eine in diesem Ausführungsbeispiel nicht dargestellte Dichtscheibe mit Mitnehmerringen (analog dem ersten Ausführungsbeispiel, siehe Fig. 5 und 6) aufgesteckt werden kann. Die Funktionsweise bei einer Durchmesserveränderung ist dann ebenfalls analog dem ersten Ausführungsbeispiel.

Je größer der Durchmesser des Rahmens 240 ist, desto mehr nähert sich die Kurve der Stifte 224 bei einer Durchmesserveränderung der Durchtrittsöffnung 222 der Radiuslinie an. Es ist also vorteilhaft einen möglichst großen Durchmesser für den Rahmen 240 zu wählen, um ein Verdrehen der Dichtscheibe um die Extrusionsachse zu vermeiden.

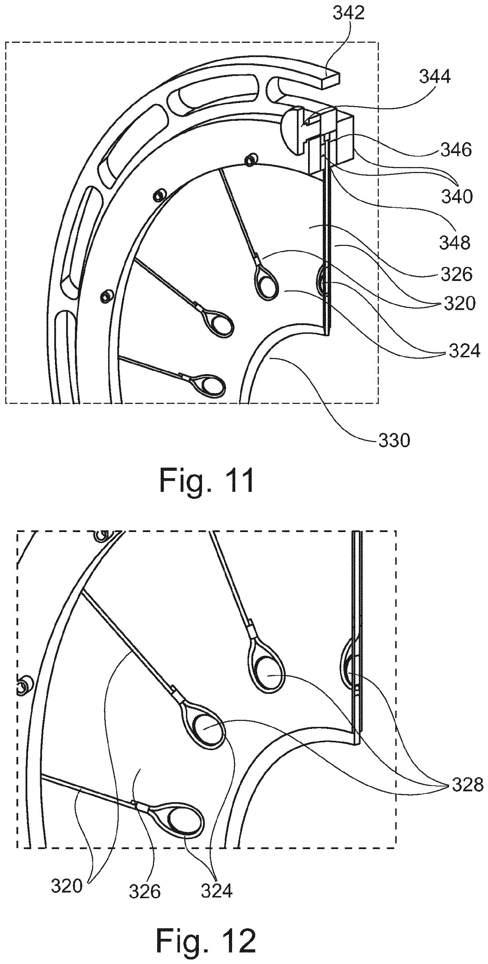

Fig. 10 zeigt eine erfindungsgemäße Dichtung 300 gemäß einem dritten Ausführungsbeispiel der Erfindung. Darin dargestellt ist eine elastische Dichtscheibe 326, bspw. aus Gummi, mit einer Durchführungsöffnung 332 und einem die Durchführungsöffnung umgebenden Dichtrand 330. In die Dichtscheibe 326 sind Drahtzüge 320 als Spannmitteln und Kauschen bzw. Schlaufen 324 als Verbindungsmittel zwischen zwei Lagen der Dichtscheibe 326, bspw. aus Gummi, einvulkanisiert. Die Drahtzüge 320 sind radial zur Extrusionsachse angeordnet und bilden an ihrem der Durchführungsöffnung 332 zugewandten Ende die Kauschen 324 einstückig aus. Innerhalb der Kauschen 324 sind Ankerscheiben 328 (Fig. 12), bspw. ebenfalls aus Gummi, als Anschlussmittel zwischen den zwei Lagen der Dichtscheibe 326 einvulkanisiert. Die Kauschen 324 sind somit in der Dichtscheibe fixiert, während die Drahtzüge 320 in der Dichtscheibe verschiebbar sind, so dass durch Zug auf die Drahtzüge 320 der Durchmesser der Durchführungsöffnung 332 vergrößert wird.

Die Dichtscheibe 326 ist etwa plan in einen Rahmen 340 eingefasst. Um den Rahmen 340 ist ein Umfangsrad 342 drehbar gelagert. Das Umfangsrad 342 kann mit einer Feststellschraube 344 in seiner Drehposition fixiert werden. Die Drahtzüge 320 sind am Umfangsrad 342 fixiert und werden durch Drehung des Umfangsrades 342 am Rahmen 340 umgelenkt, so dass sich ihre radiale Länge verkürzt und der Dichtrand 330 aufgeweitet wird.

Fig. 11 zeigt eine vergrößerte Schnittdarstellung aus Fig. 10. Darin ist die Befestigung der Drahtzüge 320 am Umfangsrad 342 in Drahtzugaufnahmen 346 zur Aufnahme der Drahtzüge 320 mit ihrem der Durchführungsöffnung 332 abgewandten Ende erkennbar. Ebenfalls erkennbar ist ein im Rahmen 340 verlaufender Kanal 348, in welchem die Drahtzüge 320 entlanglaufen, wenn das Umfangsrad 342 aus der Ausgangsstellung gedreht wird und die radialen Abschnitte der Drahtzüge 320 verkürzt werden.

Fig. 12 zeigt ebenfalls eine vergrößerte Schnittdarstellung aus Fig. 10. Darin sind die innerhalb der Kauschen 324 einvulkanisierten Ankerscheiben 328, welche die Kauschen 324 in der Dichtscheibe fixieren, hervorgehoben. Drahtzüge 320, Kauschen 324 und Ankerscheiben 328 sind in diesem Ausführungsbeispiel zwischen zwei Lagen der Dichtscheibe 326 einvulkanisiert.

### Bezugszeichenliste

- 10: Rohr/Endlosprofil
- 12: Vakuumtank
- 14: Wasservorlagebehälter
- 16: einfache Scheibendichtung
- 18: Trichterdichtung
- 100: erfindungsgemäße Dichtung gemäß erstem Ausführungsbeispiel
- 120: Segmente (Spannmittel)
- 121: Segmentrollen
- 122: Durchtrittsöffnung gemäß dem ersten Ausführungsbeispiel
- 124: Mitnehmerstifte gemäß dem ersten Ausführungsbeispiel (Verbindungsmittel)
- 125: Mitnehmerstiftanker
- 126: Dichtscheibe gemäß ersten Ausführungsbeispiel
- 128: Mitnehmerringe/Ringe/Ösen (Anschlussmittel)
- 130: Dichtrand gemäß ersten Ausführungsbeispiel
- 132: Durchführungsöffnung gemäß ersten Ausführungsbeispiel
- 142: Pneumatikzylinder (Antriebsmittel)
- 200: erfindungsgemäße Dichtung gemäß dem zweiten Ausführungsbeispiel
- 220: Streben (Spannmittel)
- 222: Durchtrittsöffnung gemäß dem zweiten Ausführungsbeispiel
- 224: Stifte/Mitnehmerstifte gemäß dem zweiten Ausführungsbeispiel (Verbindungsmittel)
- 225: Langloch
- 240: Rahmen gemäß dem zweiten Ausführungsbeispiel
- 300: erfindungsgemäße Dichtung gemäß dritten Ausführungsbeispiel
- 320: Drahtzüge (Spannmittel)
- 324: Kauschen/Schlaufen (Verbindungsmittel)
- 326: Dichtscheibe gemäß drittem Ausführungsbeispiel
- 328: Ankerscheibe (Anschlussmittel)
- 330: Dichtrand gemäß drittem Ausführungsbeispiel
- 332: Durchführungsöffnung gemäß drittem Ausführungsbeispiel
- 340: Rahmen gemäß dem dritten Ausführungsbeispiel
- 342: Umfangsrad (Antriebsmittel)
- 344: Feststellschraube
- 346: Drahtzugaufnahme
- 348: Kanal

## Patentansprüche

1. Dichtung (100, 200, 300) zum Einsatz in einer Strangpressvorrichtung zur Herstellung von Endlosprofilen, insbesondere Kunststoffrohren (10), umfassend
eine elastische Dichtscheibe (126, 326), welche in einer Ebene etwa senkrecht zur Extrusionsrichtung angeordnet ist und eine das Endlosprofil (10) durchlassende Durchführungsöffnung (132, 332) mit einem am Endlosprofil (10) anliegenden Dichtrand (130, 330) sowie entlang des Dichtrandes (130, 330) angeordnete Anschlussmittel (128, 328) aufweist, sowie
Spannmittel (120, 220, 320) zur Ausübung einer radial zur Extrusionsachse wirkenden Kraft auf die Anschlussmittel (128, 328), wobei die Spannmittel (120, 220, 320) in einer Ebene parallel zur Dichtscheibe (126, 326) angeordnet sind, eine Durchtrittsöffnung (122, 222, 332) für das Endlosprofil (10) bilden und Verbindungsmittel (124, 224, 324) zur Verbindung der Anschlussmittel (128, 328) mit den Spannmitteln (120, 220, 320) umfassen,
**dadurch gekennzeichnet, dass**
die Anschlussmittel (128, 328) in die Dichtscheibe (126, 326) einvulkanisiert sind.

2. Dichtung nach Anspruch 1, wobei die Anschlussmittel (128) und die Verbindungsmittel (124, 224) eine komplementäre, lösbare Verbindung bilden.

3. Dichtung nach einem der vorhergehenden Ansprüche, wobei die Spannmittel (320) als radial zur Extrusionsachse ausgerichtete Drahtzüge (320) ausgestaltet sind.

4. Dichtung nach Anspruch 3, wobei ein um die Dichtscheibe (326) und die Extrusionsachse drehbar gelagertes Umfangsrad (342) als Antriebsmittel vorgesehen ist, in welches die Drahtzüge (320) eingreifen, so dass durch Drehung des Umfangsrades (342) die radiale Länge der Drahtzüge (320) verändert wird.

5. Dichtung nach einem der vorhergehenden Ansprüche, wobei die Dichtscheibe (326) zwei fest miteinander verbundene Lagen aufweist.

6. Dichtung nach Anspruch 5, wobei die Anschlussmittel (328), Verbindungsmittel (324) und/oder Spannmittel (320) mindestens teilweise zwischen den Lagen angeordnet sind.

7. Dichtung nach einem der vorhergehenden Ansprüche, wobei die Anschlussmittel (328) fest mit der Dichtscheibe (326) verbunden sind.

8. Dichtung nach einem der Ansprüche 3 bis 7, wobei die Drahtzüge (320) an ihren der Extrusionsachse zugewandten Enden als Kauschen oder Schlaufen (324) ausgebildete Verbindungsmittel (324) aufweisen.

9. Dichtung nach Anspruch 8 in Verbindung mit Anspruch 5, wobei die Kauschen oder Schlaufen (324) als Ankerscheiben (328) ausgestaltete Anschlussmittel umgreifen, welche fest zwischen den Lagen der Dichtscheibe (326) angeordnet sind.

10. Dichtung nach einem der Ansprüche 5 bis 7, wobei die Anschlussmittel als Ösen ausgestaltet sind, welche mindestens teilweise zwischen den Lagen der Dichtscheibe (326) angeordnet sind und fest mit dieser verbunden sind.

11. Dichtung nach Anspruch 10, wobei die Drahtzüge (320) an ihren der Extrusionsachse zugewandten Enden als Haken oder Schlaufen ausgebildete Verbindungsmittel aufweisen, welche in die Ösen eingreifen.

## Claims

1. A seal (100, 200, 300) for use in an extrusion device for producing continuous profiles, in particular plastic pipes (10), comprising
an elastic sealing disc (126, 326), which is arranged in a plane approximately perpendicularly to the extrusion direction and has a through-passage opening (132, 332) for passage of the continuous profile (10), with a sealing rim (130, 330) lying against the continuous profile (10), and connection means (128, 328) arranged along the sealing rim (130, 330), and clamping means (120, 220, 320) for exerting a force, acting radially to the extrusion axis, onto the connection means (128, 328), wherein the clamping means (120, 220, 320) are arranged in a plane parallel to the sealing disc (126, 326), form a passage opening (122, 222, 332) for the continuous profile (10) and comprise linking means (124, 224, 324) for linking the connection means (128, 328) with the clamping means (120, 220, 320),
**characterized in that**
the connection means (128, 328) are vulcanized into the sealing disc (126, 326).

2. The seal according to Claim 1, wherein the connection means (128) and the linking means (124, 224) form a complementary, detachable connection.

3. The seal according to one of the preceding claims, wherein the clamping means (320) are configured as wire cables (320) aligned radially to the extrusion axis.

4. The seal according to Claim 3, wherein a circumferential wheel (342), rotatably mounted about the sealing disc (326) and the extrusion axis, is provided as drive means, into which the wire cables (320) engage, so that by rotation of the circumferential wheel (342) the radial length of the wire cables (320) is altered.

5. The seal according to one of the preceding claims, wherein the sealing disc (326) has two layers securely connected with one another.

6. The seal according to Claim 5, wherein the connection means (328), linking means (324) and/or clamping means (320) are arranged at least partially between the layers.

7. The seal according to one of the preceding claims, wherein the connection means (328) are securely connected to the sealing disc (326).

8. The seal according to one of Claims 3 to 7, wherein the wire cables (320) have, at their ends facing the extrusion axis, linking means (324) configured as thimbles or loops (324).

9. The seal according to Claim 8 in connection with Claim 5, wherein the thimbles or loops (324) encompass connection means configured as anchor discs (328), which are arranged securely between the layers of the sealing disc (326).

10. The seal according to one of Claims 5 to 7, wherein the connection means are configured as eyes which are arranged at least partially between the layers of the sealing disc (326) and are securely connected therewith.

11. The seal according to Claim 10, wherein the wire cables (320) have, at their ends facing the extrusion axis, linking means configured as hooks or loops, which engage into the eyes.

## Revendications

1. Joint d'étanchéité (100, 200, 300) destiné à être utilisé dans un dispositif d'extrusion pour fabriquer des profilés sans fin, en particulier des tuyaux en plastique (10), comprenant
une rondelle d'étanchéité (126, 326) élastique qui est disposée dans un plan environ vertical au sens d'extrusion, et une ouverture de passage (132, 332) laissant passer le profilé sans fin (10) au travers avec un bord d'étanchéité (130, 330) reposant sur le profilé sans fin (10) ainsi que des moyens de raccordement (128, 328) disposés le long du bord d'étanchéité (130, 330), ainsi que
des moyens de serrage (120, 220, 320) pour exercer une force agissant radialement sur les moyens de raccordement (128, 328), dans lequel les moyens de serrage (120, 220, 320) sont disposés dans un plan parallèle à la rondelle d'étanchéité (126, 326), forment une ouverture de passage (122, 222, 232) pour le profilé sans fin (10) et comprennent des moyens de liaison (124, 224, 324) pour relier les moyens de raccordement (128, 328) aux moyens de serrage (120, 220, 320),
**caractérisé en ce que**
les moyens de raccordement (128, 328) sont vulcanisés dans la rondelle d'étanchéité (126, 326).

2. Joint selon la revendication 1, dans lequel les moyens de raccordement (128) et les moyens de liaison (124, 224) forment une liaison séparable complémentaire.

3. Joint selon l'une des revendications précédentes, dans lequel les moyens de serrage (320) sont conçus en tant que fils métalliques (320) alignés radialement par rapport à l'axe d'extrusion.

4. Joint selon la revendication 3, dans lequel une roue périphérique (342) disposée rotative autour de la rondelle d'étanchéité (326) et l'axe d'extrusion est prévue en tant que moyen d'entraînement, dans laquelle les fils métalliques (320) se mettent en prise, de façon à ce que la rotation de la roue périphérique (342) modifie la longueur radiale des fils métalliques (320) .

5. Joint selon l'une des revendications précédentes, dans lequel la rondelle d'étanchéité (326) présente deux couches reliées fixement entre elles.

6. Joint selon la revendication 5, dans lequel les moyens de raccordement (328), moyens de liaison (324) et/ou moyens de serrage (320) sont disposés au moins partiellement entre les couches.

7. Joint selon l'une des revendications précédentes, dans lequel les moyens de raccordement (328) sont reliés fixement à la rondelle d'étanchéité (326).

8. Joint selon l'une des revendications 3 à 7, dans lequel les fils métalliques (320) présentent des moyens de liaison (324) formés en tant que cosses ou boucles (324) sur leur extrémités tournées vers l'axe d'extrusion.

9. Joint selon la revendication 8 en liaison avec la revendication 5, dans lequel les cosses ou boucles (324) entourent des moyens de raccordement formés en tant que rondelles d'ancrage (328), qui sont disposés fixement entre les couches de la rondelle d'étanchéité (326) .

10. Joint selon l'une des revendications 5 à 7, dans lequel les moyens de raccordement sont conçus en tant qu'oeillets qui sont disposés au moins partiellement entre les couches de la rondelle d'étanchéité (326) et reliés fixement à celle-ci.

11. Joint selon la revendication 10, dans lequel les fils métalliques (320) présentent des moyens de liaison formés en tant que crochets ou boucles, sur leurs extrémités tournées vers l'axe d'extrusion, qui se mettent en prise dans les oeillets.
